(19) Europäisches Patentamt
European Patent Office
Office européen des brevets

(11) Veröffentlichungsnummer: **0 161 607 B1**

(12) # EUROPÄISCHE PATENTSCHRIFT

(45) Veröffentlichungstag der Patentschrift: **29.05.91**

(51) Int. Cl.$^5$: **C08B 11/193**

(21) Anmeldenummer: **85105491.6**

(22) Anmeldetag: **06.05.85**

Die Akte enthält technische Angaben, die nach dem Eingang der Anmeldung eingereicht wurden und die nicht in dieser Patentschrift enthalten sind.

(54) **Verfahren zur Herstellung von wasserlöslichen Cellulosemischethern.**

(30) Priorität: **15.05.84 DE 3417952**

(43) Veröffentlichungstag der Anmeldung:
**21.11.85 Patentblatt 85/47**

(45) Bekanntmachung des Hinweises auf die Patenterteilung:
**29.05.91 Patentblatt 91/22**

(84) Benannte Vertragsstaaten:
**AT BE CH DE FR GB IT LI NL SE**

(56) Entgegenhaltungen:
**EP-A- 0 126 959**
**DE-A- 1 568 423**
**GB-A- 734 924**

(73) Patentinhaber: **HOECHST AKTIENGESELLSCHAFT**
**Postfach 80 03 20**
**W-6230 Frankfurt am Main 80(DE)**

(72) Erfinder: **Felcht, Utz-Hellmuth, Dr. Dipl.-Chem.**
**Hubertusstrasse 2**
**W-6223 Bad Soden(DE)**
Erfinder: **Buchberger, Gerhard, Dipl.-Ing.**
**Tannenring 56**
**W-6200 Wiesbaden-Auringen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

**Beschreibung**

Die Erfindung betrifft ein Verfahren zur Herstellung von wasserlöslichen Cellulosemischethern in drei Stufen.

Die Herstellung von Celluloseethern mit einheitlichen oder unterschiedlichen Arten von Ethersubstituenten ist bekannt (siehe z. B. Ullmanns Encyklopädie der technischen Chemie, Band 9, Stichwort "Celluloseäther", Verlag Chemie - Weinheim, 4. Auflage 1975, S. 192 ff.), wobei diese im allgemeinen entweder x) nach dem Prinzip der Ethersynthese nach Williamson durch Umsetzung von Cellulose mit Alkyl- oder Aralkylhalogeniden (unter stöchiometrischem Verbrauch einer Base) und/oder y) durch Umsetzung von Cellulose mit aktivierten, zu direkten Reaktionen mit Hydroxylgruppen befähigten Reaktionspartnern (in Anwesenheit katalytischer, d. h. unterstöchiometrischer Mengen einer Base) hergestellt werden:

x) $$\text{Cell-}\overline{\underline{O}}\text{-H} + \text{Hal-R}^1 + \text{BOH} \longrightarrow \text{Cell-}\overline{\underline{O}}\text{-R}^1 + H_2O + \text{BHal}$$

y) 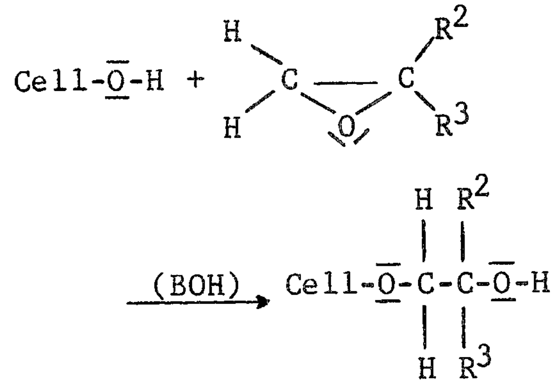


In diesen allgemeinen Gleichungen bedeuten:

- Cell-O-H: eine zu verethernde Hydroxylgruppe am Cellulosemolekül,
- Hal: Chlor oder Brom,
- $R^1$: einen Alkylrest von $C_1$ bis $C_{15}$, einen Aralkylrest von $C_7$ bis $C_{15}$, einen Carboxyalkylrest von $C_1$ bis $C_3$, einen Sulfonoalkylrest von $C_1$ bis $C_3$, einen Phosphonoalkylrest von $C_1$ bis $C_3$, einen Hydroxyalkylrest von $C_1$ bis $C_6$ oder einen N,N-Dialkylaminoalkylrest von $C_1$ bis $C_3$ für die Alkylgruppen,
- $R^2$, $R^3$: Wasserstoff oder einen Alkylrest von $C_1$ bis $C_{13}$, wobei $R^2$ gleich $R^3$ oder davon verschieden ist,
- BOH: Base wie NaOH, Alkali- oder Erdalkalihydroxide, oder eine quaternäre Ammonium-base.

Durch gleichzeitiges oder stufenweises Einwirken von verschiedenen Veretherungsmitteln auf Cellulose werden auch Cellulosemischether hergestellt, wobei neben einem Reaktionsablauf nach nur einer der angegebenen Varianten x oder y, insbesondere auch Reaktionen durchgeführt werden, die nach beiden Varianten ablaufen. Beispiele für Reaktionsprodukte, die nach der Variante x) hergestellt werden können, sind: Methylcellulose (MC), Benzylcellulose (BC), Carboxymethylcellulose (CMC), Sulfonoethylcellulose (SEC), Phosphonomethylcellulose (PMC) oder N,N-Diethylaminoethylcellulose (DEAEC). Beispiele für Reaktionsprodukte, die nach der Variante y) hergestellt werden können, sind: Hydroxyethylcellulose (HEC) oder Hydroxypropylcellulose (HPC). Zu den Mischethern der Cellulose, deren Herstellung nach einer oder nach beiden der angegebenen Varianten ablaufen kann, zählen beispielsweise Methyl-hydroxyethylcellulose (MHEC), Ethyl-hydroxyethylcellulose (EHEC), Hydroxyethyl-hydroxypropylcellulose (HEHPC), Methyl-carboxymethylcellulose (MCMC), Hydroxyethyl-phosphonomethylcellulose (HEPMC) oder Methyl-hydroxyethyl-hydroxypropylcellulose (MHEHPC). Unter dem Begriff "Celluloseether" sind im Rahmen der folgenden Ausführungen sowohl Produkte mit einem einheitlichen Substituenten wie Hydroxyethylcellulose als auch Produkte mit mindestens zwei verschiedenen Substituenten wie Methyl-carboxymethylcellulose zu verstehen.

In der prioritätsälteren, nicht-vorveröffentlichten EP-A-126 959 wird ein Verfahren zur Herstellung von wasserlöslichen Cellulosemischethern in drei Stufen beschrieben, nämlich mit

a) einer Alkalisierung von Cellulose,

b) einer Veretherung der Alkalicellulose in Anwesenheit einer Base mit mindestens einem Veretherungsmittel, das zur Umsetzung mit Cellulose eine katalytische und unterstöchiometrische Menge einer Base benötigt, und

c) nach Erhöhung der Basenmenge einer weiteren Veretherung des so hergestellten Celluloseethers mit mindestenseinem Veretherungsmittel, das zur Umsetzung mit Cellulose eine mindestens stöchiometrische oder eine gegenüber a) erhöhte katalytische und unterstöchiometrische Menge an Base benötigt,

wobei in mindestens einer der Stufen mindestens ein inertes organisches Lösemittel aus der Gruppe Dimethoxyethan, einem Alkanol, einem Alkandiol und einem Alkoxyalkanol als Dispergierhilfsmittel und in allen Stufen Wasser anwesend sind. Insbesondere zählen neben Dimethoxyethan zu diesen Dispergierhilfsmitteln Alkanole von $C_1$ bis $C_5$ (z. B. Isopropanol), Alkandiole von $C_2$ bis $C_3$ (z. B. Ethylenglykol) und Alkoxy($C_1$ bis $C_4$)alkan($C_2$ oder $C_3$)ole (z. B. Methoxyethanol). Als Veretherungsmittel werden in der Stufe b) beispielsweise Ethylenoxid und in der Stufe c) beispielsweise Methylchlorid oder Monochloressigsäure eingesetzt. Im übrigen wird wegen weiterer Einzelheiten und eine ausführliche Diskussion zum Stand der Technik ausdrücklich auf diese DE-A Bezug genommen.

In vom vorstehenden Verfahren deutlich abweichenden Herstellverfahren des Standes der Technik ist auch bereits Dimethylether als organisches Lösemittel eingesetzt worden, dazu zählen beispielsweise das Verfahren

- der GB-A 909 039 zur Herstellung von MC, MHEC oder MHPC, bei dem Dimethyl- oder Diethylether zum Einsatz kommen; eine Veränderung des Alkaligehalts im Reaktionsgemisch wird nicht durchgeführt, in den Beispielenselbst wird kein Cellulosemischether synthetisiert, die dort eingesetzte Menge an Dimethylether beträgt etwa das 2- bis 3fache des Cellulosegewichts, und das organische Lösemittel ist nicht während der Alkalisierungsstufe anwesend,
- der DE-C 15 43 136 (= US-A 3 544 556) zur Herstellung von MC, MHEC oder MHPC, bei dem der als Nebenprodukt der Veretherung entstehende Dimethylether zum Einsatz kommt; eine Veränderung des Alkaligehalts im Reaktionsgemisch wird nicht durchgeführt, die eingesetzte Menge an Dimethylether beträgt in den Beispielen etwa 0,3 bis 0,4 Gew.-Teile pro Gew.-Teil Cellulose, und das organische Lösemittel ist nicht während der Alkalisierungsstufe anwesend,
- der DE-A 26 36 935 (= US-A 4 015 067) zur Herstellung von verschiedensten Celluloseethern, bei dem als organische Lösemittel überschüssiges Alkylchlorid, Dimethylether, Hexan, Benzol oder Toluol zum Einsatz kommen sollen; eine Veränderung des Alkaligehalts im Reaktionsgemisch wird nicht durchgeführt, in den Beispielen selbst wird allerdings kein organisches Lösemittel außer überschüssigem Alkylchlorid eingesetzt, die Reaktionskomponenten werden alle in einem Gefäß vorgemischt und die Summe aus Veretherungsmittel und einem organischen Lösemittel soll etwa das 10- bis 20fache des Cellulosegewichts betragen, wobei der Anteil des Dimethylethers 60 % der Summe nicht überschreiten soll.

Aufgabe der vorliegenden Erfindung ist es, ein Verfahren zur Herstellung von wasserlöslichen Cellulosemischethern, d. h. von Celluloseethern mit mindestens 2 Arten von unterschiedlichen Substituenten, aufzufinden, bei dem die Produkte wirtschaftlich, d. h. insbesondere mit hoher selektiver Wirksamkeit in den Veretherungsstufen, herstellbar sind und eine ausgezeichnete Produktqualität, d. h. eine gleichmäßige Veretherung und damit gute Löslichkeitseigenschaften und möglichst geringe oder keine Rückstände, zeigen. Insbesondere soll ein organisches Lösemittel gefunden werden, das den Energieaufwand für Lösemittelredestillationen im Verfahren gemäß der eingangs dargestellten DE-A 33 16 124 reduziert, ohne die Vorteile des Verfahrens aufzugeben.

Die Erfindung geht aus von dem Verfahren zur Herstellung von wasserlöslichen Cellulosemischethern in den Stufen

a) Alkalisierung der Cellulose,

b) Veretherung der Alkalicellulose in Anwesenheit einer Base mit mindestens einem Veretherungsmittel, das zur Umsetzung mit Cellulose eine katalytische und unterstöchiometrische Menge einer Base benötigt, und

c) nach Erhöhung der Basenmenge weiterer Veretherung des so hergestellten Celluloseethers mit mindestens einem Veretherungsmittel, das zur Umsetzung mit Cellulose eine mindestens stöchiometrische oder eine gegenüber a) erhöhte katalytische und unterstöchiometrische Menge an Base benötigt, wobei in mindestens einer der Stufen mindestens ein inertes organisches Lösemittel als Dispergierhilfsmittel und in allen Stufen Wasser anwesend ist. Das erfindungsgemäße Verfahren ist dann dadurch gekennzeichnet, daß als organisches Lösemittel Dimethylether allein oder im Gemisch mit Dimethoxyethan, einem Alkanol, einem Alkandiol und/oder einem Alkoxyalkanol eingesetzt wird.

Der Einsatz von Dimethylether ist ebenso wie der von Dimethoxyethan an sich literaturbekannt. Zu den Alkanolen, Alkandiolen und Alkoxyalkanolen zählen insbesondere Alkanole von $C_1$ bis $C_5$, Alkandiole von $C_2$

oder $C_3$ (oder auch oligomere oder polymere Individuen mit Einheiten aus diesen Alkandiolen) und Alkoxy-($C_1$ bis $C_4$)alkan($C_2$ oder $C_3$)ole, bevorzugt werden Methanol, Ethanol, Isopropanol, tert. Butanol und Ethylenglykol (Ethandiol(1 ,2)). Der Dimethylether ist insbesondere einzeln, aber möglich auch im Gemisch mit einem oder mehreren der anderen genannten Lösemittel im Alkalisierungs- und/oder Veretherungsgemisch vorhanden. Es sind - abhängig von dem oder den Veretherungsmittel(n), d. h. von der Art des bzw. der zu erzielenden Ethersubstituenten und sofern überhaupt Mischungen eingesetzt werden - grundsätzlich alle Mischungsverhältnisse zwischen den Lösemitteln möglich, bevorzugt werden jedoch nicht mehr als 50 Gew.-% an Dimethoxyethan, Alkanolen, Alkandiolen und/oder Alkoxyalkanolen dem Dimethylether zugesetzt, insbesondere 0,1 bis 30 Gew.-%.

Von den Veretherungsmitteln, die in den eingangs dargestellten Verfahrensvarianten möglich sind, werden Ethylenoxid,Propylenoxid, Methylchlorid und/oder Monochloressigsäure oder eines ihrer Salze oder hydrolysierbaren Derivate bevorzugt. Das erfindungsgemäße Verfahren kann beispielsweise so durchgeführt werden, daß Dimethylether und gegebenenfalls weiteres organisches Lösemittel in beiden Veretherungsstufen b) und c) und gegebenenfalls auch in der Alkalisierungsstufe a) anwesend ist; bevorzugt wird es jedoch so durchgeführt, daß die oder das organische Lösemittel in der Veretherungsstufe b) und gegebenenfalls auch in der Alkalisierungsstufe a) anwesend ist und vor Beginn der Veretherungsstufe c) gemeinsam mit den übrigen unter der Siedetemperatur des Wassers liegenden Komponenten destillativ aus dem Gemisch entfernt wird. Diese letztere Variante wird insbesondere bei Einsatz der Veretherungsmittel Ethylenoxid oder Propylenoxid in der ersten Veretherungsstufe [Stufe b)] und Methylchlorid in der zweiten Veretherungsstufe [Stufe c)] und bei Einsatz von Dimethylether, Dimethoxyethan und/oder Isopropanol und gegebenenfalls Methanol als organisches Lösemittel angewandt. Dadurch ist insbesondere der Einsatz eines großen Überschusses an Alkylenoxid in der ersten Veretherungsstufe möglich, beispielsweise um möglichst kurze Reaktionszeiten zu erzielen oder um eine gleichmäßigere Verteilung der Substitution über die Molekülkette der Celluloseether zu bewirken, der dann vor Durchführung der zweiten Veretherungsstufe durch Destillation oder Ausdämpfen zurückgenommen und ohne weitere Reinigung wieder im Verfahren eingesetzt werden kann (Recycling). Das Verfahren soll bei allen Varianten zu wasserlöslichen Produkten führen, d. h. dieProdukte weisen DS- und/oder MS-Werte auf, die eine Wasserlöslichkeit bewirken; darunter wird insbesondere verstanden, daß die Produkte zu mindestens 90 %, insbesondere zu mindestens 97 % wasserlöslich sind.

Das erfindungsgemäße Verfahren kann diskontinuierlich oder auch kontinuierlich in einem oder mehreren der von der Celluloseetherchemie her bekannten druckfest ausgerüsteten Aggregate (z. B. Kneter, Rührkessel oder Wurfmischer) durchgeführt werden. Da einerseits die Temperatur des Reaktionsgemisches im allgemeinen so hoch gewählt wird, daß sie über der Siedetemperatur des Gemisches aus organischen Lösemitteln/$H_2O$ liegt und andererseits der Siedepunkt des Dimethylethers ohnehin deutlich unter Raumtemperatur liegt, ist die Durchführung des erfindungsgemäßen Verfahrens in einer Druckapparatur zwingend; auch bei Einsatz von unter Normalbedingungen (Normaldruck, Raumtemperatur) bereits gasförmigen Reaktionskomponenten wird üblicherweise in einer Druckapparatur gearbeitet (z. B. bei Einsatz von Ethylenoxid als Veretherungsmittel), so daß diese auf dem Gebiet bereits bekannt und üblich ist. Die in den folgenden Ausführungen angegebenen Mengenanteile für die Komponenten geben lediglich die Summe der Anteile der zur Reaktion erforderlichen Komponenten zu Beginn der jeweiligen Veretherungsstufe an, dann liegt bei der separaten Alkalisierungsstufe bereits ein Teil der Cellulose und des Alkalimetallhydroxids als Alkalicellulose vor; oder wenn das Veretherungsmittel beispielsweise in der Säureform (z.B. Monochloressigsäure zur Herstellung vom CMC) in das Reaktionsgemischeingegeben wird, so müssen zur Neutralisation zusätzliche Basenanteile eingesetzt werden.

Die eingesetzte Cellulose ist entweder natürlicher Herkunft, beispielsweise Baumwoll-Linters oder Holz-Zellstoff, oder liegt in regenerierter Form wie als Cellulosehydrat vor; die Teilchengröße der Cellulose sollte vor Beginn der Reaktion möglichst kleiner als etwa 2,5 mm, insbesondere kleiner als etwa 1 mm sein, wobei diese Teilchengröße beispielsweise durch Mahlung der längerfaserig angelieferten Cellulose zu "Pulvern" erreicht werden kann. Im erfindungsgemäßen Verfahren können - verglichen mit bekannten Verfahren - bei gleicher Wirksamkeit auch Teilchengrößen zum Einsatz kommen, die sonst eher nicht verwendet werden.

Die Basen werden bevorzugt als Alkalimetallhydroxid - üblicherweise NaOH, aber auch KOH oder LiOH - in fester Form oder in gelöster Form als wäßrige Alkalimetallhydroxid-Lösung (beispielweise in 10 bis 50 gew.-%iger Form) eingesetzt, aber auch Ammoniumbasen können verwendet werden. Bevorzugt werden im erfindungsgemäßen Verfahren etwa 0,5 bis 30 Gew.-Teile organisches Lösemittel pro Gew.-Teil Cellulose eingesetzt, besonders bevorzugt 1 bis 18 Gew.-Teile. Sofern Alkalimetallhydroxide als Basen eingesetzt werden, beträgt ihr Anteil in der jeweiligen Stufe im allgemeinen 0,5 bis 12,0 Mol, insbesondere 0,8 bis 6,0 Mol, pro Mol Cellulose (als Anhydro-D-glukose-Einheit gerechnet), dieser Anteil richtet sich aber - wie weiter

oben und in den Beispielenausgeführt - nach der Veretherungsvariante x) oder y). In den Stufen a) und b) liegt der Alkalimetallhydroxidanteil bevorzugt bei etwa 0,5 bis 1,5 Mol und in der Stufe c) (zumindest bei der Herstellung von MHEC oder MHPC) bevorzugt bei etwa 2,0 bis 6,0 Mol. Der Wasseranteil im Reaktionsgemisch wird zweckmäßig so gewählt, daß er im Bereich von 5 bis 25 Mol pro Mol Cellulose liegt; oder wenn als Bezugsgröße das Flüssigkeitsgemisch organische(s) Lösemittel/Wasser dienen soll, so liegt der Anteil des Wassers im Gemisch bei 3 bis 40 Gew.-%. Als Veretherungsmittel werden bevorzugt Alkylchloride von $C_1$ bis $C_3$, Alkylenoxide von $C_2$ bis $C_4$ und/oder Chloralkansäuren von $C_2$ bis $C_4$ bzw. deren Salze oder hydrolysierbare Ester eingesetzt, insbesondere Methylchlorid, Ethylchlorid, Ethylenoxid, Propylenoxid und/oder Monochloressigsäure oder ein entsprechendes Salz oder Ester. Es können aber auch Butylenoxid-1,2, Monochlorpropionsäure, Chlorethansulfonsäure, Vinylsulfonsäure, Acrylnitril, Chlormethanphosphonsäure, 1-N,N-Diethylamino-2-chlorethan oder 2,3-Epoxypropyl-trimethylammoniumchlorid zur Reaktion gebracht werden. Der Anteil des Veretherungsmittels beträgt jeweils 0,05 bis 30 Mol, insbesondere 0,1 bis 10 Mol, pro Mol Cellulose. Bei dem besonders bevorzugten Verfahren zur Herstellung von MHEC oder MHPC liegt der Molanteil des Veretherungsmittels in der Stufe b) bei 0,05 bis 2,0 Mol und in der Stufe c) bei 1,0 bis 30 Mol.

Bei der praktischen Durchführung des erfindungsgemäßen Verfahrens wird bevorzugt die Cellulose im Gemisch aus dem oder den organischen Lösemittel(n), Wasser und Alkalimetallhydroxid (oder quaternärer Ammoniumbase) alkalisiert, wonach die Zugabe des Veretherungsmittels in den beiden oben dargestellten Stufen (abhängig von der Art der Veretherungsmittel) erfolgt. Es ist aber auch eine Alkalisierung ohne Anwesenheit des oder der organischen Lösemittel(s) möglich, wobei deren Zugabe dann erst bei mindestens einer der Veretherungsstufen erfolgt. Die jeweiligen Reaktionsgemische und Reaktionsgefäße können bekanntermaßen auch mit Inertgasen wie Stickstoff gespült werden, um Sauerstoff zu entfernen und so hohe Viskositäten der Reaktionsprodukte zu erreichen; auch sogenannte Antioxidantien wie Pyrogallol oder Gallussäure können zur Verhinderung des Viskositätsabbaus (Depolymerisation) zugesetzt werden.

Alle Stufen werden in der Regel unter guter Durchmischung gefahren. In der separaten Alkalisierungsstufe wird üblicherweise bei Raumtemperatur (von 0 °C, insbesondere von 15 bis 30 °C) gearbeitet, die Veretherung verläuft besonders erfolgreich bei einer Temperatur zwischen 30 und 120 °C, insbesondere bis zu 110 °C. Dabei wird in der Regel die erste Veretherungsstufe bei niedrigerer Temperatur gefahren, dann insbesondere die Basenmenge erhöht und die zweite Veretherungsstufe bei höherer Temperatur gefahren. Der sich maximal im Reaktionsgefäß einstellende Druck entspricht der Summe der Partialdrucke der Komponenten im Reaktionsgemisch.

Die erforderlichen Zeiten in den Veretherungsstufen liegen- je nach Reaktionstemperatur - im allgemeinen zwischen 20 min und 8 h. Das Rohprodukt wird, bevorzugt nach Zugabe von Säure bis zur Neutralisation der noch unverbrauchten Basen, durch Destillation von dem oder den Lösemittel(n) und weiteren flüchtigen Komponenten befreit und kann gegebenenfalls danach einer Extraktion zur Entfernung anhaftender Salze unterzogen werden; abschließend wird es getrocknet und kann gegebenenfalls gemahlen, mit weiteren Komponenten vermischt oder auch granuliert werden; diese Aufarbeitungs-, Reinigungs- und Nachbehandlungsmethoden sind die in der Celluloseetherchemie üblichen und benötigen deshalb keine ausführliche Beschreibung.

Zu den besonderen Vorteilen des erfindungsgemäßen Verfahrens zählen, neben den bereits vorher aufgeführten, die folgenden. Die in der ersten Veretherungsstufe eingesetzte Basenmenge, die dort grundsätzlich nur katalytisch benötigt wird, steht vollständig für die zweite Veretherungsstufe zum Verbrauch zur Verfügung; dies gilt insbesondere auch für die Variante, bei der das oder die organische(n) Lösemittel und gegebenenfalls ein Überschuß an Veretherungsmittel nach der ersten und vor Beginn der zweiten Veretherungsstufe durch Destillation bzw. Ausdämpfen größtenteils entfernt werden, da die Base, insbesondere ein Alkalihydroxid dabei nicht entfernt wird. Es gelingt durch die grundsätzlich unabhängig durchführbaren Stufen, in jeder Stufe die für eine optimale Produktqualität und eine ökonomische und ökologische Verfahrensweise erforderlichen Mengenverhältnisse und Verfahrensparameter einzustellen. Der Einsatz von Dimethylether als zwingender Komponente führt zu einer Verbesserung des Stoffaustauschs und damit zu einer verbesserten Wirksamkeit der einzusetzenden Veretherungsmittel.

Die nach dem erfindungsgemäßen Verfahren herstellbaren Celluloseether können auf den bekannten Gebieten der Technik eingesetzt werden, also beispielsweise als Verdickungsmittel, Klebstoff, Zusatzmittel auf dem Baustoffgebiet, Zusatzmittel auf dem Lebensmittelgebiet o.ä..

In den folgenden Beispielen verhalten sich Gew.-Teile zu Vol.-Teilen wie kg zu $dm^3$, die Prozentangaben sind auf das Gewicht bezogen. Der "DS" ist der Substitutionsgrad, d. h. die mittlere Anzahl von substituierten OH-Gruppen pro Anhydro-D-glucose-Einheit; er liegt bei Cellulose im Bereich von 0,0 bis 3,0. Der "MS" ist der molare Substitutionsgrad, d. h. die mittlere Anzahl von Molen des substituierenden Reagens, die pro Mol AnhydroD-glucose-Einheit etherartig gebunden werden; er kann bei Cellulose auch

größer als 3,0 sein; er wird normalerweise anstelle des DS zur Charakterisierung solcher Substituenten am Celluloseethermolekül verwendet, die durch Mehrfachsubstitution an einer OH-Gruppe entstehen können, d. h. beispielsweise beim Hydroxyalkylsubstituenten, weil die entstehenden OH-Gruppen der Hydroxyalkylgruppen ebenfalls - wie die OH-Gruppen der Cellulose selbst - substituierbar sind.

Beispiel 1

Es werden 3 Gew.-Teile gemahlener, lufttrockener Fichtenzellstoff nach Inertisierung mit Stickstoff mit 3 Gew.-Teilen Dimethylether pro Gew.Teil Cellulose in einem druckfesten Mischaggregat gemischt. Unter Luftausschluß werden 2,48 Gew.-Teile einer wäßrigen 28%igen NaOH-Lösung zudosiert, und es wird während 30 min bei Raumtemperatur gerührt. Nach Zugabe von 0,19 Gew.-Teilen Ethylenoxid erwärmt man die Dispersion unter Rühren auf 70 °C und beläßt sie während 30 min bei dieser Temperatur. Anschließend unterwirft man das Reaktionsgemisch einer Destillation zur möglichst restlosen Entfernung des Dimethylethers und gegebenenfalls des Überschusses an Ethylenoxid, wobei das Destillat in einer gekühlten Vorlage gesammelt und in einem neuen Ansatz oder kontinuierlich wiederverwendet werden kann. Das alkalische Reaktionsprodukt wird im Mischer mit 2,3 Gew.-Teilen (d. h. 0,77 Gew.-Teilen pro Gew.-Teil Cellulose) frischen Dimethylethers und 5,64 Gew.-Teilen einer technischen 49,5%igen wäßrigen NaOH-Lösung bei 20 bis 40 °C intensiv vermischt und während 30 min bei gleicher Temperatur alkalisiert. Dort werden 4,4 Gew.-Teile Methylchlorid zugesetzt, und man methyliert bei 85 °C Reaktionstemperatur während 1,5 h. Nach Destillation der flüchtigen Anteile wird die erhaltene MHEC mit heißem Wasser salzfrei gewaschen und getrocknet. Es resultiert ein klarlösliches Produkt mit einem $DS_M$ von 1,99 und einem $MS_{HE}$ von 0,18.

Beispiel 2

Es wird nach Beispiel 1 verfahren, zur Alkalisierung werden jedoch 2,03 Gew.-Teile einer 27,5%igen wäßrigen NaOH-Lösung verwandt, und man alkalisiert während 45 min bei Raumtemperatur. Nach erfolgter Alkalisierung werden 0,51 Gew.-Teile Propylenoxid zugegeben, und man erwärmt auf 80 °C. Die Mischung wird während 1 h bei dieser Temperatur behandelt. Anschließend wird der Dimethylether abdestilliert, wobei unumgesetzte Anteile an Propylenoxid ebenfalls entfernt werden. Das Destillat, das ca. 20 % des eingesetzten Propylenoxids enthält, steht für eine erneute Reaktion zur Verfügung. Die so hergestellte Hydroxypropylcellulose wird mit 3,2 Gew.-Teilen Dimethylether versetzt. Man fügt 4,51 Gew.-Teile einer technischen 49,5%igen wäßrigen NaOH-Lösung zu und alkalisiert während 30 min bei 20 bis 40 °C. Nach Zugabe von 3,52 Gew.-Teilen Methylchlorid wird das Gemisch langsam auf 85 °C erwärmt und 1,5 h bei dieser Temperatur belassen. Anschließend werden die flüchtigen Bestandteile der Mischung abdestilliert. Die so erhaltene MHPC wird mit heißem Wasser salzfrei gewaschen. Es resultiert ein klarlösliches Produkt mit einem $DS_M$ von 1,82 und einem $MS_{HP}$ von 0,20.

Beispiel 3

Es wird nach Beispiel 1 verfahren, zur Alkalisierung werden jedoch 2,72 Gew.-Teile einer 28,2%igen wäßrigen NaOH-Lösung verwandt, und man alkalisiert während 15 min bei Raumtemperatur. Anschließend werden 0,92 Gew.-Teile Ethylenoxid zugegeben. Die Mischung wird auf 30 °C erwärmtund 30 min bei dieser Temperatur gehalten. Danach heizt man auf 70 °C und mischt weitere 60 min bei dieser Temperatur. Der Dimethylether wird danach abdestilliert und steht für eine nächste Reaktion zur Verfügung. Die so erhaltene Hydroxyethylcellulose wird nach Zugabe von 0,72 Gew.-Teilen einer technischen 49,5%igen wäßrigen NaOH-Lösung während 30 min bei 20 bis 40 °C alkalisiert. Man gibt 9 Gew.-Teile Isopropanol (als 85%ige wäßrige Lösung) zu und dosiert in 15 min 4,65 Gew.-Teile einer wäßrigen Lösung ein, die aus 1,32 Gew.-Teilen Monochloressigsäure, 0,33 Gew.-Teilen Wasser und 3 Gew.-Teilen Isopropanol (85%iges Azeotrop) hergestellt wird. Das Gemisch wird innerhalb von 30 min auf 70 °C aufgeheizt, und man beginnt anschließend mit der Vakuumdestillation des Isopropanols, wobei die Reaktion vervollständigt wird. Nach der Destillation wird ein neutrales, feinteiliges Produkt erhalten. Die so erhaltene Carboxymethylhydroxyethylcellulose hat als ungereinigte Ware gute Anwendungseigenschaften als Zusatzstoff bei der Erdölbohrung. Der $DS_{CM}$ beträgt 0,70, der $MS_{HE}$ 0,80.

**Ansprüche**

1. Verfahren zur Herstellung von wasserlöslichen Cellulosemischethern in den Stufen
   a) Alkalisierung der Cellulose,
   b) Veretherung der Alkalicellulose in Anwesenheit einer Base mit mindestens einem Veretherungsmittel, das zur Umsetzung mit Cellulose eine katalytische und unterstöchiometrische Menge einer Base benötigt, und
   c) nach Erhöhung der Basenmenge weiterer Veretherung des so hergestellten Celluloseethers mit mindestens einem Veretherungsmittel, das zur Umsetzung mit Cellulose eine mindestens stöchiometrische oder eine gegenüber a) erhöhte katalytische und unterstöchiometrische Menge an Base benötigt,
   wobei in mindestens einer der Stufen mindestens ein inertes organisches Lösemittel als Dispergierhilfsmittel und in allen Stufen Wasser anwesend ist, dadurch gekennzeichnet, daß als organisches Lösemittel Dimethylether allein oder im Gemisch mit Dimethoxyethan, einem Alkanol, einem Alkandiol und/oder einem Alkoxyalkanol eingesetzt wird.

2. Verfahren nach Anspruch 1, dadurch gekennzeichnet, daß als Veretherungsmittel, das eine katalytische und unterstöchiometrische Menge einer Base benötigt, eine Verbindung der allgemeinen Formel

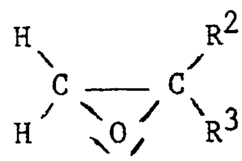

eingesetzt wird, in der $R^2$, $R^3$ Wasserstoff oder einen Alkylrest von $C_1$ bis $C_{13}$ bedeuten, wobei $R^2$ gleich $R^3$ oder davon verschieden ist.

3. Verfahren nach Anspruch 1 oder 2, dadurch gekennzeichnet, daß als Veretherungsmittel, das eine mindestens stöchiometrische Menge an Base benötigt, eine Verbindung der allgemeinen Formel

   $Hal - R^1$

   eingesetzt wird, in der $R^1$ einen Alkylrest von $C_1$ bis $C_{15}$, einen Aralkylrest von $C_7$ bis $C_{15}$, einen Carboxyalkylrest von $C_1$ bis $C_3$, einen Sulfonoalkylrest von $C_1$ bis $C_3$, einen Phosphonoalkylrest von $C_1$ bis $C_3$, einen Hydroxyalkylrest von $C_1$ bis $C_6$ oder einen N,N-Dialkylaminoalkylrest von $C_1$ bis $C_3$ für die Alkylgruppen und Hal Chlor oder Brom bedeuten.

4. Verfahren nach einem der Ansprüche 1 bis 3, dadurch gekennzeichnet, daß neben Dimethylether ein Alkanol von $C_1$ bis $C_5$, ein Alkandiol von $C_2$ bis $C_3$ und/oder ein Alkoxy($C_1$ bis $C_4$)alkan($C_2$ oder $C_3$)ol eingesetzt wird.

5. Verfahren nach Anspruch 2, dadurch gekennzeichnet, daß als Veretherungsmittel Ethylen- und/oder Propylenoxid eingesetzt wird.

6. Verfahren nach Anspruch 3, dadurch gekennzeichnet, daß als Veretherungsmittel Methylchlorid oder Monochloressigsäure oder eines ihrer Salze oder hydrolysierbaren Derivate eingesetzt wird.

7. Verfahren nach einem der Ansprüche 1 bis 6, dadurch gekennzeichnet, daß der Dimethylether in beiden Veretherungsstufen b) und c) und gegebenenfalls auch in der Alkalisierungsstufe a) anwesend ist.

8. Verfahren nach einem der Ansprüche 1 bis 6, dadurch gekennzeichnet, daß der Dimethylether in der Veretherungsstufe b) und gegebenenfalls auch in der Alkalisierungsstufe a) anwesend ist und vor Beginn der Veretherungsstufe c) gemeinsam mit den übrigen unter der Siedetemperatur des Wassers liegenden Komponenten destillativ aus dem Gemisch entfernt wird.

## Claims

1. A process for preparing a water-soluble mixed cellulose ether, comprising the following steps:
   a) alkalization of the cellulose,
   b) etherification of the alkali cellulose in the presence of a base using at least one etherifying agent which, for reaction with cellulose, requires a catalytic and sub-stoichiometric quantity of a base, and
   c) after increasing the quantity of base, further etherification of the cellulose ether so prepared, using at least one etherifying agent which, for reaction with cellulose, requires an at least stoichiometric quantity of a base or a catalytic and sub-stoichiometric quantity of a base, which is increased over the quantity used in step (a),
   wherein in at least one of the steps at least one inert organic solvent is present as a dispersing auxiliary and water is present in each step, the organic solvent used being dimethyl ether alone or in a mixture with dimethoxyethane, an alkanol, an alkanediol and/or an alkoxyalkanol.

2. The process as claimed in claim 1, wherein the etherifying agent which is used and requires a catalytic and sub-stoichiometric quantity of a base is a compound of the formula

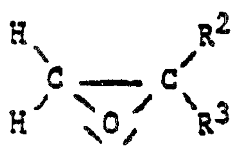

   in which $R^2$ and $R^3$ denote hydrogen or an alkyl radical from $C_1$ to $C_{13}$, where $R^2$ is identical to or different from $R^3$.

3. The process as claimed in claim 1 or 2, wherein the etherifying agent which is used and which requires an at least stoichiometric quantity of a base is a compound of the formula

   Hal - $R^1$,

   in which $R^1$ is a $C_1$- to $C_{15}$- alkyl radical, a $C_7$- to $C_{15}$-aralkyl radical, a $C_1$- to $C_3$- carboxyalkyl radical, a $C_1$-to $C_3$- sulfonoalkyl radical, a $C_1$- to $C_3$- phosphonoalkyl radical, a $C_1$- to $C_6$- hydroxyalkyl radical or an N,N-dialkylaminoalkyl radical containing $C_1$- to $C_3$- alkyl groups, and Hal denotes chlorine or bromine.

4. The process as claimed in one of claims 1 to 3, wherein a $C_1$- to $C_5$- alkanol, a $C_2$- to $C_3$- alkanediol and/or a $C_1$- to $C_4$- alkoxy ($C_2$- or $C_3$-) alkanol is used in addition to dimethyl ether.

5. The process as claimed in claim 2, wherein the etherifying agent used is ethylene oxide and/or propylene oxide.

6. The process as claimed in claim 3, wherein the etherifying agent used is methyl chloride or monochloroacetic acid or one of its salts or hydrolyzable derivatives.

7. The process as claimed in one of claims 1 to 6, wherein the dimethyl ether is present in both etherification steps (b) and (c) and optionally also in alkalization step (a).

8. The process as claimed in one of claims 1 to 6, wherein the dimethyl ether is present in etherification step (b) and optionally also in alkalization step (a) and is, together with the other components which have boiling points below the boiling point of water, removed from the mixture by distillation before the beginning of etherification step (c).

## Revendications

1. Procédé pour préparer des éthers mixtes de la cellulose solubles dans l'eau, comprenant les étapes suivantes :

a) alcalinisation de la cellulose,

b) éthérification de l'alcali-cellulose en présence d'une base avec au moins un agent d'éthérification qui nécessite, pour la réaction avec la cellulose, une quantité catalytique et sub-stoechiométrique d'une base, et

c) après augmentation de la quantité de base, éthérification complémentaire de l'éther de la cellulose ainsi préparé, avec au moins un agent d'éthérification qui nécessite, pour la réaction avec la cellulose, une quantité de la base au moins égale à la quantité stoechiométrique ou une quantité de la base catalytique et sub-stoechiométrique supérieure à la quantité mise en jeu sous a),

procédé selon lequel on utilise comme adjuvant de dispersion, dans au moins une des étapes, au moins un solvant organique inerte et, dans toutes les étapes, on opère en présence d'eau, et qui est caractérisé en ce qu'on utilise, comme solvant organique, de l'oxyde de diméthyle seul ou en mélange avec du diméthoxy-éthane, un alcanol, un alcane-diol et/ou un alcoxyalcanol.

2. Procédé selon la revendication 1 caractérisé en ce qu'on utilise, comme agent d'éthérification nécessitant une quantité catalytique et sub-stoechiométrique d'une base, un composé répondant à la formule générale :

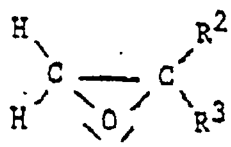

dans laquelle $R^2$ et $R^3$ représentent chacun l'hydrogène ou un radical alkyle contenant de 1 à 13 atomes de carbone, ces symboles $R^2$ et $R^3$ pouvant avoir la même signification ou des significations différentes.

3. Procédé selon l'une des revendications 1 et 2, caractérisé en ce qu'on utilise, comme agent d'éthérification nécessitant une quantité au moins stoechiométrique d'une base, un composé répondant à la formule générale :

$Hal - R^1$

dans laquelle $R^1$ représente un radical alkyle contenant de 1 à 15 atomes de carbone, un radical aralkyle contenant de 7 à 15 atomes de carbone, un radical carboxy-alkyle contenant de 1 à 3 atomes de carbone, un radical sulfono-alkyle contenant de 1 à 3 atomes de carbone, un radical phosphono-alkyle contenant de 1 à 3 atomes de carbone, un radical hydroxyalkyle contenant de 1 à 6 atomes de carbone ou un radical N,N-dialkylaminoalkyle contenant de 1 à 3 atomes de carbone dans les radicaux alkyle, et Hal représente le chlore ou le brome.

4. Procédé selon l'une quelconque des revendications 1 à 3, caractérisé en ce qu'on utilise, en plus de l'oxyde de diméthyle , un alcanol en $C_1$-$C_5$, un alcane-diol en $C_2$ ou $C_3$ et/ou un alcoxy ($C_1$-$C_4$)-alcanol-($C_2$-$C_3$).

5. Procédé selon la revendication 2 caractérisé en ce qu'on utilise, comme agent d'éthérification, l'oxyde d'éthylène et/ou l'oxyde de propylène.

6. Procédé selon la revendication 3 caractérisé en ce qu'on utilise, comme agent d'éthérification, le chlorure de méthyle ou l'acide monochloracétique ou l'un de ses sels ou dérivés hydrolysables.

7. Procédé selon l'une quelconque des revendications 1 à 6, caractérisé en ce que l'oxyde de diméthyle est présent dans les deux étapes d'éthérification b) et c) et éventuellement aussi dans l'étape d'alcalinisation a).

8. Procédé selon l'une quelconque des revendications 1 à 6, caractérisé en ce que l'oxyde de diméthyle est présent dans l'étape d'éthérification b) et éventuellement aussi dans l'étape d'alcalinisation a) et en ce qu'il est éliminé du mélange, par distillation, avant le début de l'étape d'éthérification c), en même temps que les autres composantes se trouvant à une température inférieure à la température

d'ébullition de l'eau.